# EUROPEAN PATENT APPLICATION

(11) **EP 1 669 550 A2**
(43) Date of publication of application: **14.06.2006**
(21) Application number: 05256779.9
(22) Date of filing: 02.11.2005
(51) Int. Cl.: F01D 21/04, F01D 25/24

(54) **Composite sandwich with improved ballistic toughness**

(30) Priority: 02.11.2004 US 979265
(71) Applicant: UNITED TECHNOLOGIES CORPORATION, Hartford, CT 06101 (US)
(72) Inventor: Hornick, David Charles, East Hampton CT 06424 (US); Treat, Robert Kenneth, Marlborough CT 06447 (US); Foose, Andrew, Vernon CT 06066 (US)
(74) Representative: Leckey, David Herbert

(57) **Abstract**

A composite structure (10) having improved ballistic toughness and suitable for use in a fan containment case is provided. The composite structure (10) includes a plurality of core layers (12), a plurality of inner plies (14) position between adjacent ones of the core layers (12), each of the inner plies (14) being formed from an organic matrix composite, an inner skin (16) located adjacent an innermost one of the core layers (12), and an outer skin (18) located adjacent an outermost one of the core layers (12). In a preferred embodiment, the core layers (12) are formed from a honeycomb material made from aluminum or an aluminum alloy.

## Description

### BACKGROUND OF THE INVENTION

The present invention relates to gas turbine engines, and, more particularly to a composite structure within the fan region for containing released blade fragments of a gas turbine engine.

Gas turbine engines have large fans at the forward end that rotate at high speeds. If a fan blade fails and is released the fragments become high-energy projectiles. These fragments can weigh as much as seven kilograms and can travel at speeds about 9.30 meters per second. It is critical to contain these blade fragments and to retain the structural integrity of the casing that surrounds the fan and its blades.

A typical containment structure is shown in U.S. Patent No. 4,490,092 to Premont. A support structure has "C" shaped stiffeners between inner and outer shrouds. This structure surrounds the fan and has multiple layers of woven KEVLAR ballistic fabric. This fabric is wound under tension and serves to resiliently contain blade fragments passing through the support structure.

FIGS. 10 - 15 of the '092 patent illustrate the ground track of a blade fragment passing through the support structure and retained by the ballistic fabric. The blade fragment has an aft component and moves in the aft direction pulling the ballistic fabric with it. The ballistic fabric is pulled downstream with the fabric from the forward location covering the opening. The fabric on occasion is pulled into the hole by the blade during this failure event. Interaction of the fabric with the blades causes additional damage.

This has been avoided in the past by making a large honeycomb structure and positioning the cloth well away from the rotor. This however increases the diameter of the containment structure. An alternate approach would be to use mechanical fasteners to keep the fabric in place, but this could lead to concentrated loading and tearing of the fabric.

U.S. Patent No. 5,516,257 to Kasprow et al. relates to a woven fiber ballistic fabric of multiple layers surrounding an isogrid support structure. A cuff portion has shorter warp threads than the major point and also is impregnated with epoxy resin. A diameter restrains the fabric from aft movement during a blade ejection event.

Despite the existence of these structures and their good performance, the goal remains to minimize the weight of the assembly.

### SUMMARY OF THE INVENTION

Accordingly, it is an object of the present invention to provide an extremely light and stiff composite structure that will suffer minimal damage when struck by ballistic projectile and still fully support the Kevlar outer wrap.

It is a further object of the present invention to provide a composite structure as above which is suitable for use in fan containment case.

The foregoing objects are achieved by the composite structure of the present invention.

In accordance with the present invention, a composite structure suitable for use in a fan containment case is provided. The composite structure broadly comprises a plurality of core layers, a plurality of inner plies position between adjacent ones of the core layers, each of the inner plies being formed from an organic matrix composite, an inner skin located adjacent an innermost one of the core layers, and an outer skin located adjacent an outermost one of the core layers. In a preferred embodiment, the core layers are formed from a honeycomb material made from aluminum or an aluminum alloy.

Other details of the composite sandwich with improved ballistic toughness of the present invention, as well as other objects and advantages attendant thereto, are set forth in the following detailed description and the accompanying drawings wherein like reference numerals depict like elements.

### BRIEF DESCRIPTION OF THE DRAWINGS

FIG. 1 is an enlarged sectional view of a composite structure in accordance with the present invention which may be incorporated into a fan containment case; and
FIGS. 2 and 3 form a sectional view of a fan containment case of a gas turbine engine incorporating the composite structure of the present invention.

### DETAILED DESCRIPTION OF THE PREFERRED EMBODIMENT(S)

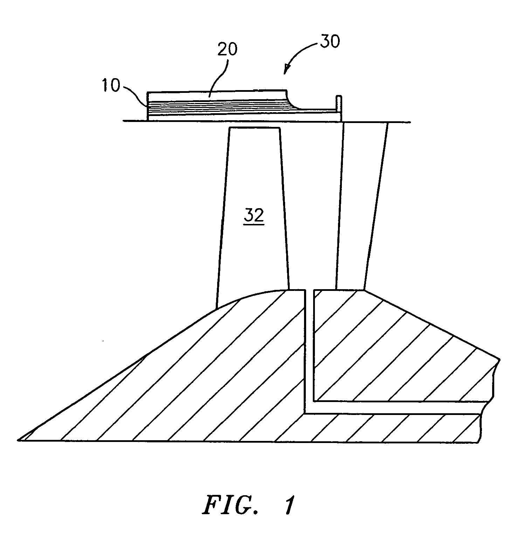

FIGS. 1 - 3 illustrate a composite structure 10 in accordance with the present invention. The composite structure 10 has a plurality of core layers 12 and a plurality of inner ply layers 14 with the inner plies 14 being located between adjacent ones of the cores 12. Each inner ply layer 14 may be joined to adjacent ones of the cores 12 by any suitable adhesive known in the art, such as a scrim supported adhesive. A scrim supported adhesive is a preferred adhesive because it will prevent galvanic reaction between the cores 12 and any carbon structure used in the layers 14.

The cores 12 may be formed from a honeycomb material or a foam material. A suitable honeycomb material is one formed from aluminum or an aluminum alloy. The walls of the honeycomb material may have any suitable thickness.

The inner plies 14 are each preferably formed from an organic matrix composite (OMC). OMC's are made from fibers that provide a high tensile strength and a matrix material that binds the fibers relative to each other. Orientation of the fibers will be such that they will provide the required structure and load paths to the case. Suitable fibers which may be used in the OMC material includes Fiberglass, aramid, and/or carbon fibers amongst others. The matrix may be a material selected from the group consisting of epoxy, bismaleimide, and polyamide resins and mixtures thereof. The foregoing fiber and matrix materials may be used in any combination with the choice of materials being driven by the required strength and temperature for the application.

The thickness of each layer 12 is based on the number of layers used and the required stiffness of the structure. It is desirable to balance the choice of density for the material forming each layer 12 against the desired layer thickness. A suitable thickness for each layer 12 of the composite sandwich of the present invention is in the range of 0.1 to 1.5 inches (2.5 to 38 mm).

The thickness of each OMC layer 14 is governed by the required stiffness/strength for the structure and the amount of energy the projectile imparts to the structure as it passes through the individual layer. The thicker the layer 14, the more energy is transferred from the projectile into the structure and therefore the more damage is incurred by the structure as a whole. A good example is that if one shoots a .22 caliber bullet into a closed telephone book, it will impart all of its energy into the book and not pass all of the way through. If you separate all of the pages by just a couple of millimeters from each other, the bullet will pass all of the way through the book easily. This is the result of energy transfer. In the composite sandwich of the present invention, each OMC layer may have a thickness in the range of from 0.08" to 0.25" (2 to 6.35 mm) based on the required stiffness and allowable energy transfer.

In addition to the layers 12 and 14, the composite structure 10 has inner and outer skins 16 and 18. The inner and outer skins 16 and 18 preferably are each formed from the same OMC material described hereinabove. The inner and outer skins 16 and 18 have a thickness in the range of 0.08" to 0.25" (2 to 6.35 mm).

Referring now to FIG. 1, a fan containment case 30 of a gas turbine engine is illustrated. The case 30 surrounds the fan and the plurality of blades 32 forming the fan. The case 30 incorporates the composite structure 10 of the present invention. The case 30 may have acoustic treatment and other structure (not shown) adhered to the inner skin 16. The inner structure may be formed from any suitable material known in the art. The case also preferably has an aromatic polyamide fiber wrap 20 surrounding the outer skin 18 of the composite structure 10. The wrap 20 comprises a plurality of plies of an aromatic polyamide fiber, such as KEVLAR, material wound in tension. After a projectile passes through the composite structure 10, the wrap 20 will supply a compression load that will generate shear in the layers 12 of the composite structure 10. In addition the composite structure 10, will be subjected to shaking loads resulting from the imbalance of the still rotating fan 32.

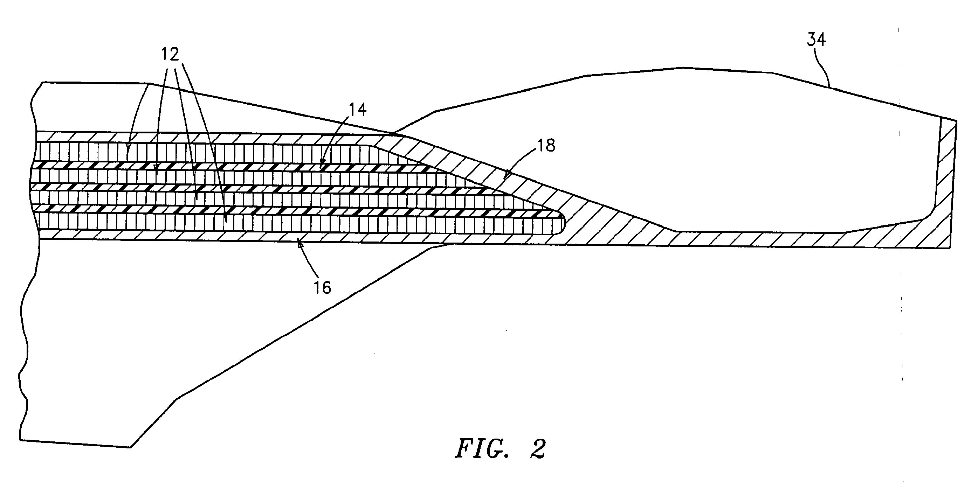

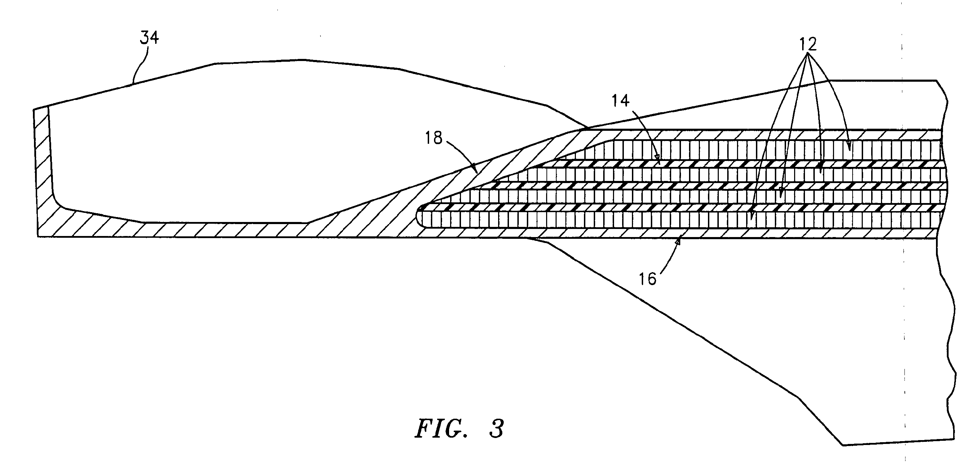

The use of multiple thin layers 12 in the composite structure 10 of the present invention takes advantage of the fact that the shear strength of the material forming the layer 12 increases as thickness decreases. An additional benefit of the composite structure design of the present invention is that a crack propagating through one of the thin layers of OMC will not have the energy needed to transition into the thicker flange region 34, shown in FIGS. 2 and 3.

The composite structure of the present invention has a number of advantages. For example, the interleaved inner plies 14 act as reinforcing plies which increase the shear capability of the cores 12. Additionally, the composite structure has improved damage tolerance with multiple load paths around the hole created by the liberated blade. Still further, the composite structure of the present invention provides major weight savings and can be easily manufactured in a highly automated process. The composite structure of the present invention is an extremely stiff structure that will suffer minimal damage when struck by a ballistic projectile. By keeping the individual layers of the OMC material thin, the amount of energy transfer at each layer is minimized.

While the composite structure of the present invention has particular utility for fan containment cases, it could be used in any area where added impact toughness is desired. Such areas include structural fairings, nacelles, and military airframes amongst others.

It is apparent that there has been provided in accordance with the present invention a composite sandwich with improved ballistic toughness which fully satisfies the objects, means, and advantages set forth hereinbefore. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. A composite structure (10) comprising:
a plurality of core layers (12);
a plurality of inner plies (14) positioned between adjacent ones of said core layers (12), each of said inner plies (14) being formed from an organic matrix composite;
an inner skin (16) located adjacent an innermost one of said core layers (12); and
an outer skin (18) located adjacent an outermost one of said core layers (12).

2. A composite structure according to claim 1, wherein each of said core layers (12) is formed from a honeycomb material.

3. A composite structure according to claim 2, wherein said honeycomb material is formed from aluminum or an aluminum alloy.

4. A composite structure according to claim 1, wherein each of said core layers (12) is formed from a foam material.

5. A composite structure according to any preceding claim, wherein each said core layer (12) has a thickness in the range of 0.1 to 1.5 inches (2.5 to 38 mm) and each of said inner plies has a thickness in the range of 0.08 to 0.25 inches (2 to 6.35 mm).

6. A composite structure according to any preceding claim, wherein each of said inner and outer skins (16, 18) is formed from an organic matrix material.

7. A composite structure according to any preceding claim, wherein said organic matrix material comprises a plurality of fibers surrounded by a matrix and said fibers are selected from the group consisting of Fiberglass, aramid, carbon and mixtures thereof.

8. A composite structure according to claim 7, wherein said matrix is selected from the group consisting of epoxy, bismaleimide, polyamide resins, and mixtures thereof.

9. A gas turbine engine comprising:
a fan having a plurality of blades (32);
a fan containment case (30) surrounding said fan;
said fan containment case (30) being formed from a composite structure as claimed in any preceding claim.

10. A gas turbine engine according to claim 9, further comprising means (20) for retaining a broken fan blade fragment surrounding said composite structure (10).

11. A gas turbine engine according to claim 10, wherein said retaining means (20) comprises a plurality of plies formed from an aromatic polyamide fiber material.
